# FASCICULE DE BREVET EUROPEEN

(11) **EP 0 690 604 B1**
(45) Date de publication et mention de la délivrance du brevet: **21.07.1999**
(21) Numéro de dépôt: 95401456.9
(22) Date de dépôt: 20.06.1995
(51) Int. Cl.: H04M 9/02, H04Q 11/04

(54) **Procédé pour assurer la confidentialité d'une liaison phonique et réseau local de télécommunication mettant en oeuvre le procédé**
Verfahren zur Sicherung der Vertraulichkeit einer Audioverbindung und lokales Telekommunikationsnetz zur Durchführung dieses Verfahrens
Method to assure the confidentiality of an audiolink and local telecommunication network carrying out this method

(30) Priorité: 28.06.1994 FR 9407948
(43) Date de publication de la demande: 03.01.1996
(73) Titulaire: THOMSON-CSF, 75008 Paris (FR)
(72) Inventeur: Fontaine, Philippe, Thomson-CSF, F-92402 Courbevoie Cédex (FR)
(74) Mandataire: Courtellemont, Alain

(56) Documents cités:
- EP-A- 0 176 215
- EP-A- 0 435 032
- REVIEW OF THE ELECTRICAL COMMUNICATION LABORATORIES, vol. 30, no. 4, TOKYO JP, pages 704-711, I.KAWASHIMA ET AL. 'Digital Key Telephone System with Complex Communications Functions'
- PHILIPS TELECOMMUNICATION REVIEW, vol. 37, no. 3, AMSTERDAM, NL, pages 170-176, G.DAVID ET AL. 'An On-Board Digital Transmission System'
- ICC'83; SESSION D2, PAPER 5;, vol. 2, 19 Juin 1983 BOSTON, US, pages 957-968, D.P. SIDHU 'Local Area Military Network'
- PATENT ABSTRACTS OF JAPAN vol. 005 no. 030 (E-047) ,24 Février 1981 & JP-A-55 156497 (NEC CORP) 5 Décembre 1980,
- PATENT ABSTRACTS OF JAPAN vol. 006 no. 205 (E-136) ,16 Octobre 1982 & JP-A-57 111166 (FUJITSU KK;OTHERS: 01) 10 Juillet 1982,

## Description

La présente invention se rapporte aux réseaux locaux de télécommunication, et en particulier à ceux de type RNIS. Il est rappelé que le sigle RNIS signifie réseau numérique à intégration de services et correspond au ISDN ou integrated service digital network de la littérature anglo-saxonne. L'invention concerne, entre autre, la confidentialité de certaines communications réalisées, grâce aux canaux B, entre un premier terminal du réseau et plusieurs autres terminaux de ce même réseau.

Il est rappelé que dans ces réseaux l'établissement d'une communication s'effectue par l'envoi d'informations dans les canaux D et que le contrôle des droits d'accès aux informations circulant dans les canaux B est réalisé grâce à l'utilisation d'annuaires, établis au moyen d'un logiciel, qui désignent les terminaux auxquels est destiné un message donné.

Pour éviter qu'une erreur de commutation ou une manipulation malveillante des annuaires entraîne la diffusion d'un message à un terminal auquel ce message n'était pas destiné, une solution consiste à chiffrer l'information dans le terminal d'émission et à équiper les seuls terminaux auxquels une émission est destinée, des moyens de déchiffrement correspondants. Il s'agit là d'une solution coûteuse et dont la mise en oeuvre n'est pas toujours possible en raison du volume occupé par les moyens de codage et de décodage et de la place disponible au niveau des terminaux.

La présente invention a pour but d'éviter ou, pour le moins, de réduire ces inconvénients.

Ceci est obtenu en incorporant aux informations de phonie émises par les terminaux et circulant dans les canaux B, des messages spécifiques dits signatures et en interposant, devant les terminaux qui ne sont pas habilités à recevoir certaines informations, des moyens de blocage qui n'autorisent le passage d'informations vers ces terminaux que si ces informations sont précédées d'une signature prédéterminée.

Selon l'invention ceci est mis en oeuvre par le procédé tel que décrit, en particulier, dans la revendication 1 ci-jointe et par le réseau local tel que décrit, en particulier, dans la revendication 6 ci-jointe.

Il est à noter par ailleurs qu'il est connu par le document EP-A-0176 215 de réaliser un réseau de téléphones sans fil dont l'unité base et les unités combiné échangent, en plus des signaux audio, des signaux de code envoyés de façon répétitive. Si l'unité base ne reçoit pas, pendant un temps donné, le signal de code de l'unité combiné avec laquelle elle est en communication, elle arrête la communication. Il s'agit donc d'une invention qui conceme seulement deux terminaux, une unité base et l'unité combiné considérée, et où il s'agit non pas d'empêcher ou d'autoriser qu'un message en cours d'émission par un premier terminal atteigne ou n'atteigne pas un second terminal mais de faire qu'il n'y ait plus d'émission par un terminal s'il n'a plus reçu le signal de code de l'autre terminal depuis un temps donné.

Il peut également être fait référence au document ICC'83, SESSION D2, PAPER 5; vol. 2; 19 juin 1983, BOSTON US, pages 957-968; D.P.SIDHU: 'Local Area Military Network'. Ce document décrit des dispositifs de sécurité pouvant être utilisés dans les réseaux de transmissions de données asynchrones, par paquets, et non dans les réseaux à liaisons phoniques; de plus l'acheminement des paquets est assuré par des ponts et un pont n'autorise que le passage des paquets contenant une adresse correspondant à une unité qui est reliée à ce pont.

Ces deux documents constituent donc un arrière-plan technologique pour l'invention.

La présente invention sera mieux comprise et d'autres caractéristiques apparaîtront à l'aide de la description ci-après et des figures s'y rapportant qui représentent:
- les figures 1 et 4, des réseaux auxquels s'applique l'invention,
- la figure 2, un filtre de communications utilisé dans des réseaux selon l'invention,
- la figure 3, un graphique relatif à un signal particulier utilisé dans le cadre de l'invention,
- la figure 5, une vue plus détaillée d'un des éléments de la figure 4.

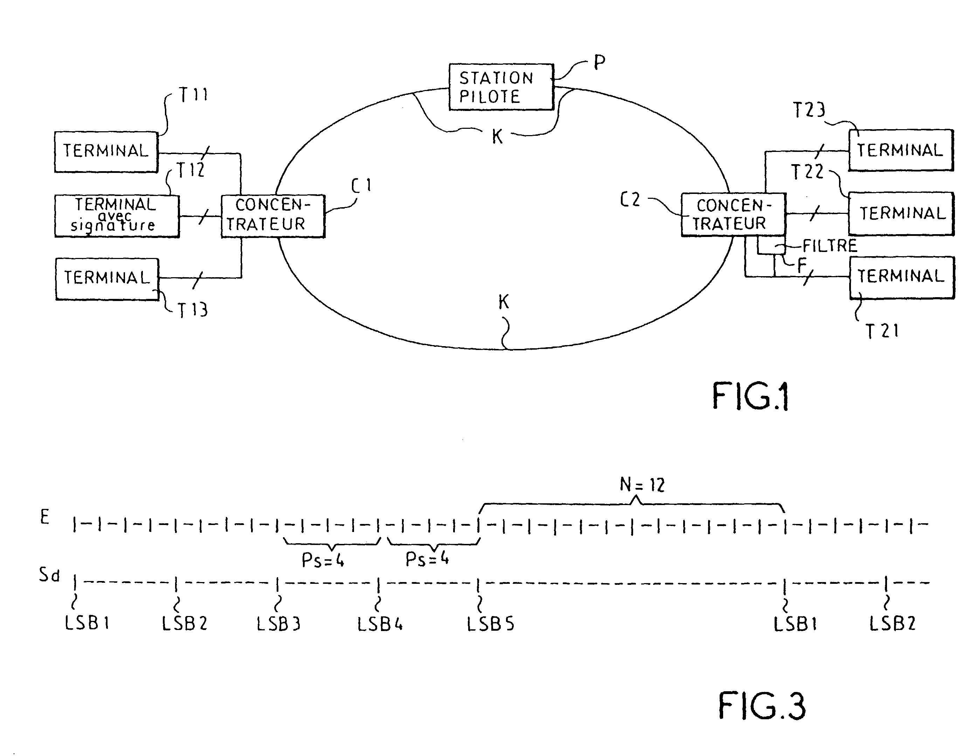

Dans les figures 1, 2, 4 et 5 les dispositifs de synchronisation précise relevant de la technologie courante, n'ont pas été représentés en vue de rendre les dessins plus clairs et de simplifier l'exposé.

Pour que, dans la description qui suit, ce qui concerne spécifiquement l'invention apparaisse clairement, les explications sur tout ce qui relève de la technique classique des réseaux locaux de type RNIS, consisteront le plus souvent à énoncer ce qui doit être effectué par l'homme du métier. Néanmoins quelques rappels seront faits sur le fonctionnement des réseaux locaux de type RNIS afin que le lecteur, même non-spécialiste, puisse comprendre sans difficulté. De plus la description sera faite sur des réseaux locaux en régime établi, sans mentionner les stations pilotes en état de veille et les trajets redondants ; ainsi il sera seulement question de celle des station pilotes qui assure la direction du réseau et, pour les trajets doublés, de celui des deux qui véhicule les informations.

La figure 1 représente un réseau local à une seule boucle, K, avec une station pilote P et deux concentrateurs C1, C2, aussi appelés unités de raccordement, sur lesquels sont respectivement connectés des terminaux T11, T12, T13 et T21, T22, T23. Dans ce qui suit il va être supposé que les messages de phonie émis par le terminal T12 ne doivent pas pouvoir être écoutés par le terminal T21.

Il est rappelé que, dans une boucle, circule de l'information sous forme de trames de 125 µs et qu'une trame comporte 1 024 intervalles de temps ou IT, appelés time slots dans la littérature anglo-saxonne, avec un octet par IT.

Sur les 1 024 IT d'une trame le premier est dédié à la synchronisation et les suivants sont attribués par la station pilote pour constituer des canaux B et D ; les canaux B sont destinés à véhiculer des informations, en particulier de la phonie, et les canaux D sont destinés à véhiculer de la signalisation et, éventuellement, certaines informations mais sans que les informations ou la signalisation présentent un caractère confidentiel et aient donc à être protégées.

Quand l'utilisateur du terminal T12 décide que l'information de phonie qu'il va transmettre, par exemple vers les terminaux T22, T23, doit également être reçue par le terminal T21, il met en service la fonction signature par action sur son terminal. Cela consiste d'une part à prévenir, par un canal D, la station pilote de la communication à effectuer ; si la station pilote juge possible l'établissement de la communication, elle attribue un canal B pour la durée de la communication. Cela consiste d'autre part à associer à l'information de phonie une signature spécifique, Sd, c'est-à-dire un message donné qui est répété avec une période donnée et qui est destiné à autoriser l'accès au terminal T21 ; cette signature qui sera décrite plus loin à l'aide d'un exemple, va permettre la transmission des informations de phonie jusqu'au terminal T21 ; en l'absence de cette signature l'information de phonie sera bloquée avant d'arriver sur le terminal T21, comme il apparaîtra dans ce qui suit.

La figure 1 montre un filtre de communications, F ; ce filtre est disposé dans celle des sorties du concentrateur C2 qui délivre au terminal T21 les informations provenant de canaux B. C'est ce filtre qui permet d'empêcher la transmission des informations de phonie jusqu'au terminal T21 en l'absence de la signature spécifique Sd dont il a été question au paragraphe précédent. Dans l'exemple décrit ce filtre est toujours actif, c'est-à-dire qu'il ne laisse passer l'information de phonie que s'il est commandé par la signature spécifique dont il a été question plus haut. Dans d'autres cas d'utilisation un filtre de communications pourra être télécommandé par la station pilote pour être rendu transparent, c'est-à-dire pour laisser passer l'information de phonie même en l'absence de la signature spécifique.

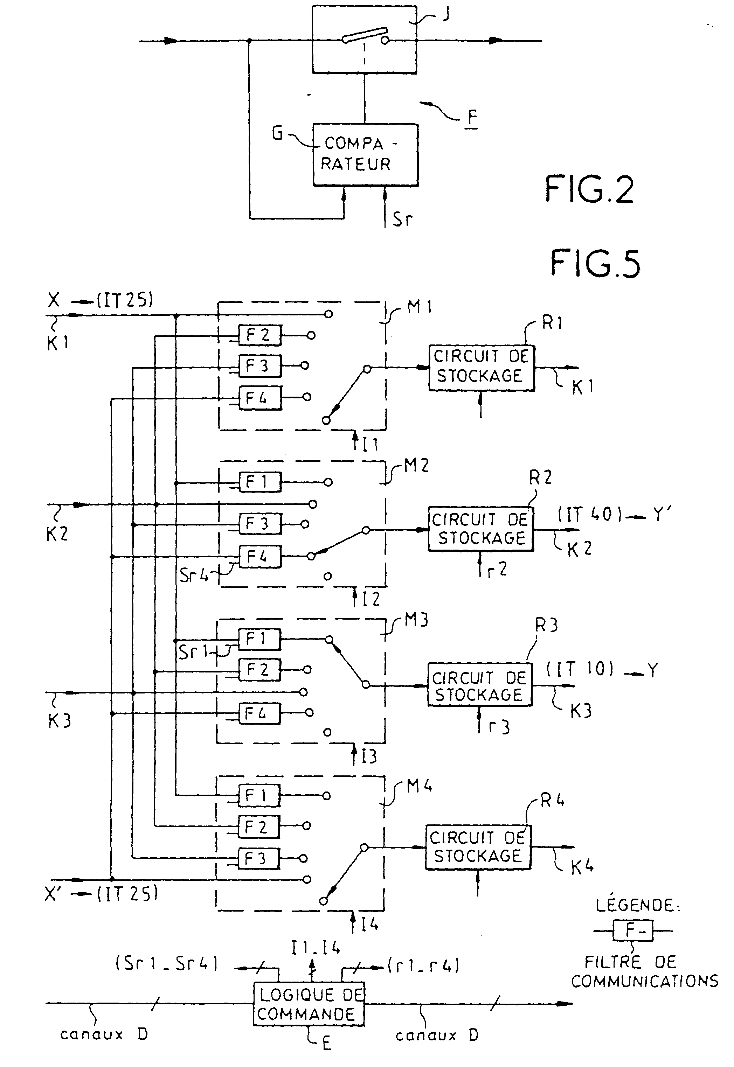

Le filtre de communications F est représenté plus en détail sur la figure 2 ; il comporte une entrée qui reçoit les IT de phonie et une sortie reliée à l'entrée par un interrupteur J. La fermeture de l'interrupteur J est commandée par un comparateur G équipé d'une bascule monostable de sortie ; ce comparateur qui reçoit en permanence les IT de phonie, y recherche la présence d'un message prédéterminé, Sr, constitué par une suite prédéterminée d'IT dont la structure lui est communiquée, sur une entrée de référence, par la station pilote ; il est à noter que ce message est gardé en mémoire dans le comparateur jusqu'à effacement sous la commande de la station pilote.

Tant que la signature Sd transmise avec l'information de phonie ne correspond pas au message prédéterminé Sr, l'interrupteur J reste ouvert. Il ne se ferme que lorsque Sd=Sr et, grâce à la bascule monostable de sortie du comparateur G, reste fermé pendant un temps légèrement supérieur à la période de répétition de la signature Sd ; ainsi la confidentialité des communications du terminal T12 est bien sauvegardée vis-à-vis du terminal T21. Par contre si le terminal T12 ou l'un quelconque des autres terminaux de la station selon la figure 1 veut transmettre des messages de phonie au terminal T21, il lui suffira de transmettre, par un canal D, via la station pilote P et le concentrateur C2, la structure de sa signature spécifique Sd au filtre F pour que ce dernier en fasse le message prédéterminé Sr à rechercher dans les informations de phonie reçues sur son entrée.

Partant de la réalisation décrite ci-avant, qui est une des plus simples qui puissent exister, il est facile de déboucher sur des réalisations plus compliquées.

Ainsi, par exemple, le circuit selon la figure 1 peut être modifié ajoutant la fonction "signature" dans les terminaux T11, T13, T21, T22, T23 et en introduisant cinq autres filtres semblables au filtre F : trois entre le concentrateur C1 et respectivement les terminaux T11, T12, T13 et deux entre le concentrateur C2 et respectivement les terminaux T22, T23. Il est alors possible, à partir de n'importe lequel des six terminaux selon la figure 1, de décider que les informations de phonie à émettre pourront être reçues par tels ou tels des cinq autres terminaux. Pour cela le terminal émetteur considéré avertit la station pilote P et celle-ci délivre, via les canaux D, aux filtres des seuls terminaux habilités, la structure de la signature spécifique Sd propre au terminal émetteur considéré ; dans ces filtres la signature spécifique devient le message prédéterminé à rechercher dans les informations de phonie.

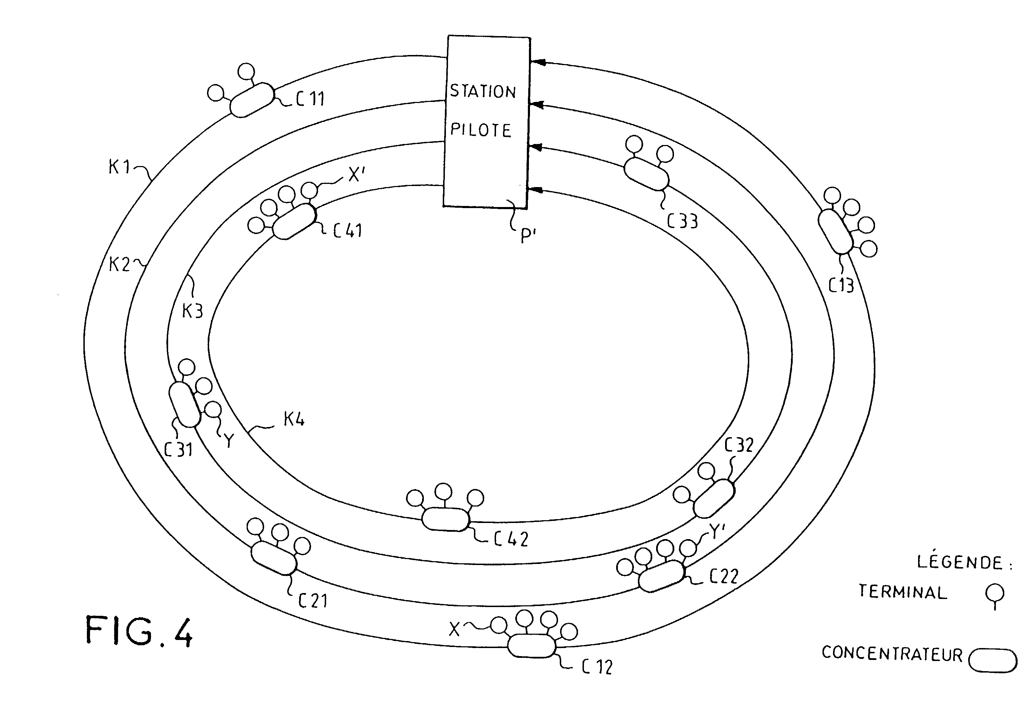

La figure 3 est un graphique qui va permettre d'expliquer, à partir d'un exemple, comment constituer une signature.

La signature est un code ajouté aux échantillons représentatifs du message de phonie émis dans le canal B. Pour le RNIS, le signal vocal est codé par des échantillons à la fréquence de 8 kHz. Chaque échantillon représente le niveau, après codage et compression, de la voix à un instant donné ; il est transmis sous la forme d'un IT de la trame. Quelle que soit la loi de codage utilisée le bit de poids faible (LSB ou Least Significant Bit dans la littérature anglo-saxonne) d'un échantillon est le moins influent sur la représentation de l'amplitude du signal original. Il est ainsi possible d'ajouter un train binaire réparti dans les bits de poids faible d'une suite d'échantillons sans dégrader de façon importante la qualité vocale du signal. L'ajout de la signature est répété cycliquement. Les paramètres caractéristiques d'une telle signature sont :
- sa longueur L en nombre de bits,
- son pas P, indiquant le nombre d'intervalles d'échantillonnage entre deux bits de poids faible d'une signature,
- son intervalle N, indiquant le nombre d'intervalles d'échantillonnage entre deux signatures.

Ces paramètres sont à définir en fonction des performances à atteindre. Ainsi, par exemple, une signature de longueur L=16 bits où les bits sont répartis tous les P=8 échantillons, dégrade le rapport signal/bruit de 6dB environ pendant son émission.

La fonction signature est intégrée dans le terminal, au niveau de l'organe de codage du signal vocal. C'est l'utilisateur qui décide quand elle doit être déclenchée et quand elle ne doit plus être émise ; son fonctionnement n'est donc pas commandé, dans l'exemple décrit, par la station pilote du réseau mais cette station est avertie du contenu de la signature par un canal D.

La figure 3 montre pour L=5, P=4, N=12 comment est émise une signature. Cette figure comporte une première ligne E sur laquelle sont symbolisés par des tirets verticaux les instants d'échantillonnage du signal de phonie. La deuxième ligne, Sd, de la figure 3 indique, par des tirets verticaux, la position, dans le temps des L=5 bits de poids faible, LSB1 à LSB5, de la signature, Sd, considérée ; le pas Ps=4 exprimé en nombre d'échantillons entre deux bits de poids faible successifs d'une signature est repéré sur la ligne E, de même que le nombre N d'intervalles d'échantillonnage séparant deux signatures successives. Dans l'exemple représenté sur la figure 3 la signature est répétée périodiquement tous les 28 échantillons. Bien entendu les bits PB1 à PB5 de la signature, même s'ils sont représentés par des tirets verticaux sur la figure 3, ne sont pas obligatoirement des 1 logiques ; c'est ainsi que la signature de la figure 3 peut être 11010 et qu'elle se répétera périodiquement sous cette forme.

Il est à noter que des variantes peuvent être proposées à la signature telle qu'elle vient d'être décrite ; ainsi les bits de poids faible, LSB, composant la signature peuvent être espacés irrégulièrement ce qui revient à dire que, dans ce cas, le pas P n'est pas fixe.

Le signal vocal, après qu'il ait été codé, peut être considéré comme aléatoire et la signature peut donc y être retrouvée fortuitement. Mais plus la signature sera longue plus ce risque sera réduit et déjà avec une signature de longueur L=10 la probabilité est de 10⁻³. En ne fermant l'interrupteur J selon la figure 2, que pendant un temps un peu supérieur aux 125 x L = 1250 microsecondes de la période de répétition des signatures, la bribe du signal vocal qui peut être entendue fortuitement a une durée très brève ; cette durée, au pire de quelques millisecondes, pour une signature assez longue est totalement insuffisante pour permettre de comprendre quoi que ce soit du signal vocal.

Une variante à la réalisation selon la figure 1 est réalisée dans le cadre d'un réseau local représenté schématiquement et de façon simplifiée sur la figure 4. Ce réseau comporte quatre boucles K1 à K4 et une station pilote P'. De façon classique les boucles K2 à K4 sont synchronisées sur la boucle K1 de manière à pouvoir transférer facilement des IT d'une boucle à l'autre; La station pilote comporte une logique de commande, E, pour commander le fonctionnement du réseau. La boucle K1 comporte trois concentrateurs C11, C12, C13, la boucle K2 deux concentrateurs C21, C22, la boucle K3 trois concentrateurs C31, C32, C33 et la boucle K4 deux concentrateurs C41, C42. Les terminaux associés aux différents concentrateurs ont été représentés par des ronds reliés par un trait au concentrateur auquel ils sont associés ; seuls quatre de ces terminaux X, X', Y, Y' respectivement associés aux concentrateurs C12, C41, C31 et C22, ont été référencés. Pour la réalisation du réseau selon l'exemple décrit, la confidentialité n'avait à être assurée que de boucle à boucle, c'est-à-dire qu'il n'y avait pas de problème de confidentialité entre les terminaux d'une même boucle ; ceci a conduit à disposer les filtres de communications non pas au niveau des concentrateurs, sur les liaisons avec les terminaux, mais au niveau de la station pilote P' comme représenté sur la figure 5 qui est un schéma partiel simplifié, montrant comment sont agencés les filtres de communications à l'intérieur de la station pilote P'.

La figure 5 représente quatre ensembles de filtrage et commutation M1 à M4 avec chacun quatre entrées et une sortie. Les premières, deuxièmes, troisièmes et quatrièmes entrées des ensembles M1 à M4 sont respectivement couplées aux accès d'arrivée des boucles K1 à K4 sur les station pilote P' et les quatre sorties des ensembles M1 à M4 sont couplées respectivement aux accès de départ des boucles K1 à K4 de la station pilote P'.

Chacun des quatre ensembles M1 à M4 comporte un commutateur électronique qui est présenté, sur la figure 5, sous la forme d'un commutateur mécanique à cinq positions dont le plot central constitue la sortie de l'ensemble de filtrage et commutation considéré et dont la commande est assurée par un signal, I1-I4, délivré par la logique de commande E.

Des cinq autres plots du commutateur de chacun des ensembles M1 à M4, le cinquième n'est pas connecté et les quatre autres sont respectivement couplés aux quatre entrées de l'ensemble considéré ; pour l'ensemble M1 les quatre couplages comportent respectivement un conducteur, un filtre F2, un filtre F3 et un filtre F4 ; pour l'ensemble M2 les quatre couplages comportent respectivement un filtre F1, un conducteur, un filtre F3 et un filtre F4 ; pour l'ensemble M3 les quatre couplages comportent respectivement un filtre F1, un filtre F2, un conducteur et un filtre F4 ; et pour l'ensemble M4 les quatre couplages comportent respectivement un filtre F1, un filtre F2, un filtre F3 et un conducteur. Tous ces filtres sont des filtres de communications semblables au filtre F des figures 1 et 2.

La station pilote, selon la figure 5 comporte, de façon classique, des circuits de stockage, R1 à R4, qui couplent les sorties des quatre ensembles de filtrage et commutation, M1 à M4, respectivement aux accès de départ des boucles K1 à K4. Ces circuits de stockage servent, sous la commande de la logique de commande E, à transférer, d'une boucle à l'autre, avec un retard moyen de la durée de deux trames, les informations contenues dans les IT ; elles permettent, par exemple de transférer l'information de l'IT 25 de la boucle K1 à l'IT 10 de la boucle K3, c'est-à-dire du vingt cinquième IT, aussi appelé canal 25, des trames de la boucle K1, au dixième IT des trames de la boucle K3.

La station pilote qui vient d'être décrite correspond à une station pilote classique à la présence près des filtres de communications qui, dans une station pilote classique, sont remplacés par de simples conducteurs.

Le fonctionnement du réseau décrit ci-avant à l'aide des figures 4 et 5, va être commenté en supposant, en particulier, que le terminal X de la boucle K1 selon la figure 4, désire adresser un message de phonie au terminal Y de la boucle K3 sans que les terminaux des boucles K2 et K4 puissent en prendre connaissance. Il adresse, par un canal D, une demande en ce sens au pilote P', en lui indiquant à quel terminal il veut que parvienne l'information et, comme dans l'exemple à une seule boucle, quelle signature Sr1 il va associer à l'information de phonie. Si la communication est possible la station pilote P' en avise le terminal émetteur X et le terminal récepteur Y par l'intermédiaire des canaux D en leur indiquant sur quel IT de la trame va s'effectuer la communication.

Il est supposé ci-après
- que le terminal X émet des messages de phonie avec une signature Sd1,
- que l'IT 25 est attribué aux messages émis dans la boucle K1 par le terminal X,
- que l'IT 10 est attribué à la transmission de ces messages dans la boucle K3,
- et que simultanément un des terminaux de la boucle K4 émet des messages de phonie sur l'IT 25 avec une signature Sd4 pour un des terminaux de la boucle K2 qui reçoit ces messages sur l'IT 40.

Dans ces conditions la logique de commande E positionne, par les signaux I1 à I4, les commutateurs des ensembles M1 à M4 comme indiqué sur la figure 5 afin
- que l'IT 25 de la boucle K1 soit dirigé, via le filtre F1 de l'ensemble M3, vers l'entrée du circuit de stockage R3,
- et que l'IT 25 de la boucle K4 soit dirigé, via le filtre F4 de l'ensemble M2, vers l'entrée du circuit de stockage R2.

De plus, pendant l'IT 25, la logique de commande E applique les messages prédéterminés Sr1=Sd1 et Sr4=Sd4 respectivement sur les entrées de référence des filtres F1 de l'ensemble M3 et F4 de l'ensemble M2 ; pour les filtres de la figure 5 le temps pendant lequel l'interrupteur de ces filtres (J selon la figure 2) reste fermé après qu'ait été reconnue la signature recherchée, a été pris un peu supérieur aux 125 microsecondes de la durée d'une trame. Enfin, par des signaux de commande r3 sur le circuit de stockage R3 et r2 sur le circuit de stockage R2, la logique de commande E retarde les IT25 des boucles K1 et K4 de telle sorte qu'ils soient respectivement transférés comme IT10 dans la boucle K3 et comme IT40 dans la boucle K2.

Ainsi réalisée la communication du terminal X vers le terminal Y ne peut être reçue, du fait d'une erreur d'aiguillage, par les terminaux des boucles K2 et K4 tant qu'elle ne comporte pas une signature correspondant à la signature spécifique des filtres F1 des ensembles M2 et M4 ; de même que la communication du terminal X' vers le terminal Y' ne peut être reçue par les terminaux des boucles K1, K3 tant qu'elle ne comporte pas une signature correspondant à la signature spécifique des filtres F4 des ensembles M1 et M3.

La présente invention n'est pas limitée aux exemples décrits c'est ainsi, en particulier, qu'elle peut être mise en oeuvre, dans un réseau multiboucle avec des filtres de communications à la fois au niveau des concentrateurs et au niveau de la station pilote.

Une autre variante consiste à concevoir au moins certains des filtres de communications pour qu'ils reconnaissent une signature donnée, toujours la même ; cela revient à appliquer sur l'entrée de référence du filtre selon la figure 2 un message prédéterminé, Sr, invariant, pour lequel la station pilote n'a à intervenir, éventuellement, que pour le rendre inopérant c'est-à-dire pour le rendre passant en permanence.

D'une façon générale l'invention s'applique à tous les réseaux locaux de télécommunication, qu'ils soient à transmission numérique ou non, mais dans lesquels, d'une part, une signature spécifique, numérique ou non, est adjointe à un message de phonie confidentiel, lors de son émission et dans lesquels, d'autre part, des moyens de filtrage de communications capables de reconnaître un message prédéterminé sont insérés en certains endroits du réseau pour créer une coupure empêchant l'acheminement des messages de phonie aux endroits où, depuis un temps donné, ils n'ont pas reconnu le message prédéterminé à l'intérieur des messages de phonie.

## Revendications

1. Procédé pour assurer la confidentialité d'une liaison phonique dans un réseau local de télécommunication comportant au moins trois terminaux distincts (T11-T23 ; X, X', Y, Y'), caractérisé en ce que, le réseau local comportant des moyens de filtrage (F ; F1-F4), il consiste à effectuer, dans les trajets d'émission de phonie d'un premier (T12; X, X') des terminaux vers n, avec n entier au moins égal à 1, des autres terminaux, des filtrages, chacun des filtrages ayant pour but de reconnaître, dans le trajet où il est effectué, un message prédéterminé (Sr) et d'interrompre le trajet dans lequel il est effectué si, pendant un temps donné, il n'a pas permis de reconnaître un message en tous points semblable au message prédéterminé, en ce qu'il consiste à donner la possibilité au premier des terminaux d'insérer, dans au moins certains des messages de phonie qu'il émet, une signature spécifique (Sd) constituée par un message donné qui est répété avec une période donnée, afin de rendre passants ceux des trajets dans lesquels le filtrage effectué a pour but de reconnaître, comme message prédéterminé, un message correspondant à la signature spécifique, et en ce qu'il consiste, lorsque le message prédéterminé et le message donné se correspondent, à avoir choisi le temps donné relatif au message prédéterminé considéré plus long que la période donnée relative au message donné considéré.

2. Procédé selon la revendication 1, caractérisé en ce que les n terminaux (T21) étant connectés dans le réseau par des concentrateurs (C1, C2; C11-C42), il consiste à faire que la partie du trajet de phonie dans laquelle les filtrages (F) sont effectués, soit située, au moins pour m, avec m entier positif au plus égal à n, de ces n terminaux, entre ces m terminaux et les concentrateurs qui connectent ces m terminaux.

3. Procédé selon la revendication 1 appliqué à un réseau dans lequel les terminaux sont répartis dans au moins deux boucles (K1-K4) couplées entre elles par une même station pilote (P'), caractérisé en ce qu'il consiste à effectuer les filtrages (F1-F4), au moins pour partie, dans la partie des trajets de phonie située à l'intérieur de la station pilote.

4. Procédé selon la revendication 1, caractérisé en ce qu'il consiste à laisser au premier terminal le choix de la signature spécifique (Sd) et à la faire transiter, à partir du premier terminal, par des trajets (canaux D) distincts des trajets d'émission de phonie pour qu'elle soit prise en compte afin d'effectuer les filtrages.

5. Procédé selon la revendication 1, caractérisé en ce que, les messages de phonie étant transmis sous forme d'échantillons numériques, il consiste à employer comme signature spécifique un nombre de plusieurs bits et à substituer les bits de ce nombre au bit de poids faible (LSB1-LSB5) de certains des échantillons.

6. Réseau local de télécommunication comportant une station pilote (P; P'), k boucles (K ; K1-K4), avec k entier au moins égal à 1, connectées à la station pilote, des concentrateurs (C1-C2; C11-C42) insérés dans les boucles et au moins trois terminaux distincts (T11-T23 ;X, X', Y, Y') connectés dans le réseau par les concentrateurs, pour émettre et recevoir des messages de phonie par des trajets utilisant la station, les k boucles et les concentrateurs, caractérisé en ce qu'il comporte, dans les trajets d'émission de phonie d'un premier (T12 ; X, X') des terminaux vers n, avec n entier au moins égal à 1, des autres terminaux, des moyens de filtrage (F ; F1-F4), chacun des moyens de filtrage étant conçu pour reconnaître, dans le trajet où il est introduit, un message prédéterminé (Sr) et pour interrompre le trajet dans lequel il est introduit si, depuis un temps donné, il n'a pas reconnu un message en tous points semblable au message prédéterminé, en ce que le premier des terminaux a la possibilité d'insérer, dans au moins certains des messages de phonie qu'il émet, une signature spécifique (Sd) constituée par un message donné qui est répété avec une période donnée, afin de rendre passants ceux des moyens de filtrage dont le message prédéterminé qu'ils ont pour rôle de reconnaître correspond à la signature spécifique, et en ce que, lorsque le message prédéterminé et le message donné se correspondent, le temps donné relatif au message prédéterminé considéré est plus long que la période donnée relative au message donné considéré.

7. Réseau local selon la revendication 6, caractérisé en ce que au moins une partie (F) des moyens de filtrage de communications est insérée entre un des terminaux (T21) et un concentrateur (C2) auquel ce terminal est couplé.

8. Réseau local selon la revendication 6, caractérisé en ce que, k étant supérieur à 1, au moins une partie (F1-F4) des moyens de filtrage de communications est insérée dans le pilote (P').

## Claims

1. Method for ensuring the confidentiality of an audiolink in a local area telecommunication network comprising at least three distinct terminals (T11-T23; X, X', Y, Y'), characterized in that, the local area network comprising filtering means (F; F1-F4), it consists in performing, in the audio transmission paths from a first (T12; X, X') of the terminals to n, with n an integer at least equal to 1, of the other terminals, filterings, the purpose of each of the filterings being to recognize, in the path in which it is performed, a predetermined message (Sr) and to interrupt the path in which it is performed if, for a given time, it has not made it possible to recognize a message which is in all respects similar to the predetermined message, in that it consists in availing the first of the terminals of the possibility of inserting, into at least some of the audio messages which it transmits, a specific signature (Sd) consisting of a given message which is repeated with a given period, so as to render passing those of the paths in which the purpose of the filtering performed is to recognize, as a predetermined message, a message corresponding to the specific signature, and in that it consists, when the predetermined message and the given message match, in having chosen the given time relating to the relevant predetermined message to be longer than the given period relating to the relevant given message.

2. Method according to Claim 1, characterized in that the n terminals (T21) being connected in the network by concentrators (C1, C2; C11-C42), it consists in making provision for that part of the audio path within which the filterings (F) are performed to be situated, at least for m, with m a positive integer at most equal to n, of these n terminals, between these m terminals and the concentrators which connect these m terminals.

3. Method according to Claim 1, applied to a network in which the terminals are distributed within at least two loops (K1-K4) which are coupled together by one and the same control station (P'), characterized in that it consists in performing the filterings (F1-F4), at least in part, in that part of the audio paths which is situated inside the control station.

4. Method according to Claim 1, characterized in that it consists in allowing the first terminal to choose the specific signature (Sd) and in sending it, from the first terminal, via paths (D channels) which are distinct from the audio transmission paths so that it is taken into account so as to perform the filterings.

5. Method according to Claim 1, characterized in that the audio messages being transmitted in the form of digital samples, it consists in employing a number of several bits as specific signature and in substituting the bits of this number for the least significant bit (LSB1-LSB5) of certain of the samples.

6. Local area telecommunication network comprising a control station (P; P'), k loops (K; K1-K4), with k an integer at least equal to 1, which are connected to the control station, concentrators (C1-C2; C11-C42) inserted into the loops and at least three distinct terminals (T11-T23; X, X', -Y, Y') connected within the network by the concentrators, so as to transmit and receive audio messages via paths which use the station, the k loops and the concentrators, characterized in that it comprises, in the audio transmission paths from a first (T12; X, X') of the terminals to n, with n an integer at least equal to 1, of the other terminals, filtering means (F; F1-F4), each of the filtering means being designed to recognize, in the path into which it is introduced, a predetermined message (Sr) and to interrupt the path into which it is introduced if, for a given time, it has not recognized a message which is in all respects similar to the predetermined message, in that the first of the terminals has the possibility of inserting, into at least some of the audio messages which it transmits, a specific signature (Sd) consisting of a given message which is repeated with a given period, so as to render passing those of the filtering means whose predetermined message which they have the task of recognizing corresponds to the specific signature, and in that, when the predetermined message and the given message match, the given time relating to the relevant predetermined message is longer than the given period relating to the relevant given message.

7. Local area network according to Claim 6, characterized in that at least a part (F) of the means for filtering calls is inserted between one of the terminals (T21) and a concentrator (C2) to which this terminal is coupled.

8. Local area network according to Claim 6, characterized in that, k being greater than 1, at least a part (F1-F4) of the means for filtering calls is inserted in the control station (P').

## Patentansprüche

1. Verfahren zum Sicherstellen der Vertraulichkeit einer Telephonverbindung in einem lokalen Telekommunikationsnetz, das wenigstens drei verschiedene Endgeräte (T11-T23; X, X', Y, Y') enthält, dadurch gekennzeichnet, daß es, da das lokale Netz Filterungsmittel (F; F1-F4) enthält, darin besteht, in den Telephonsendewegen von einem ersten (T12; Y, Y') der Endgeräte zu n, mit n ganze Zahl größer oder gleich 1, weiteren Endgeräten Filterungen auszuführen, wovon jede zum Ziel hat, in dem Weg, in dem sie ausgeführt wird, eine vorgegebene Nachricht (Sr) zu erkennen und den Weg, in dem sie ausgeführt wird, zu unterbrechen, falls sie während einer gegebenen Zeit eine der vorgegebenen Nachricht ähnliche Nachricht nicht in allen Punkten erkennen konnte, daß es darin besteht, dem ersten der Endgeräte zu ermöglichen, wenigstens in bestimmte Telephonnachrichten, die es aussendet, eine spezifische Signatur (Sd) einzufügen, die durch eine gegebene Nachricht gebildet ist, die mit einer gegebenen Periode wiederholt wird, um diejenigen der Wege durchlässig zu machen, in denen die ausgeführte Filterung zum Ziel hat, als vorgegebene Nachricht eine Nachricht zu erkennen, die der spezifischen Signatur entspricht, und daß es darin besteht, dann, wenn die vorgegebene Nachricht und die gegebene Nachricht einander entsprechen, die gegebene Zeit, die auf die betrachtete vorgegebene Nachricht bezogen ist, länger als die gegebene Periode zu wählen, die auf die betrachtete gegebene Nachricht bezogen ist.

2. Verfahren nach Anspruch 1, dadurch gekennzeichnet, daß es, da die n Endgeräte (T21) an das Netz über Durchschalter (C1, C2; C11-C42) angeschlossen sind, darin besteht, zu bewirken, daß sich der Teil des Telephonwegs, in dem die Filterungen (F) ausgeführt werden, wenigstens für m, mit m positive ganze Zahl kleiner oder gleich n, dieser n Endgeräte zwischen diesen m Endgeräten und den Durchschaltern, die diese m Endgeräte anschließen, befindet.

3. Verfahren nach Anspruch 1, das auf ein Netz angewendet wird, in dem die Endgeräte in wenigstens zwei Schleifen (K1-K4) verteilt sind, die untereinander über ein und dieselbe Hauptstation (P') verbunden sind, dadurch gekennzeichnet, daß es darin besteht, die Filterungen (F1-F4) wenigstens teilweise in dem Teil der Telephonwege auszuführen, der sich in der Hauptstation befindet.

4. Verfahren nach Anspruch 1, dadurch gekennzeichnet, daß es darin besteht, dem ersten Endgerät die Wahl der spezifischen Signatur (Sd) zu überlassen und zu veranlassen, daß diese ausgehend vom ersten Endgerät die Wege (Kanäle D), die von den Telephonsendewegen verschieden sind, durchläuft, so daß sie berücksichtigt wird, um die Filterungen auszuführen.

5. Verfahren nach Anspruch 1, dadurch gekennzeichnet, daß es dann, wenn die Telephonnachrichten in Form digitaler Abtastwerte übertragen werden, darin besteht, als spezifische Signatur eine Anzahl von mehreren Bits zu verwenden und die Bits dieser Anzahl durch das niedrigstwertige Bit (LSB1-LSB5) bestimmter der Abtastwerte zu ersetzen.

6. Lokales Telekommunikationsnetz, das eine Hauptstation (P; P'), k Schleifen (K; K1-K4), k ganze Zahl größer oder gleich 1, die an die Hauptstation angeschlossen sind, Durchschalter (C1-C2; C11-C42), die in die Schleifen eingefügt sind, und wenigstens drei verschiedene Endgeräte (T11-T23; X, X', Y, Y'), die an das Netz über die Durchschalter angeschlossen sind, um Telephonnachrichten über Wege zu senden und zu empfangen, die die Station, die k Schleifen und die Durchschalter verwenden, dadurch gekennzeichnet, daß es in den Telephonsendewegen von einem ersten (T12; X, X') der Endgeräte zu n, n ganze Zahl größer oder gleich 1, weiteren Endgeräten Filterungsmittel (F; F1-F4) enthält, wovon jedes so beschaffen ist, daß es in dem Weg, in den es eingesetzt ist, eine vorgegebene Nachricht (Sr) erkennt und den Weg, in den es eingesetzt ist, unterbricht, wenn es ab einer gegebenen Zeit eine der vorgegebenen Nachricht ähnliche Nachricht nicht in allen Punkten erkannt hat, daß das erste der Endgeräte die Möglichkeit hat, wenigstens in bestimmte der Telephonnachrichten, die es aussendet, eine spezifische Signatur (Sd) einzufügen, die durch eine gegebene Nachricht gebildet ist, die mit einer gegebenen Periode wiederholt wird, um diejenigen der Filterungsmittel durchlässig zu machen, deren vorgegebene Nachricht, die sie erkennen sollen, der spezifischen Signatur entspricht, und daß dann, wenn sich die vorgegebene Nachricht und die gegebene Nachricht entsprechen, die auf die betrachtete vorgegebene Nachricht bezogene gegebene Zeit länger als die gegebene Periode ist, die auf die betrachtete gegebene Nachricht bezogen ist.

7. Lokales Netz nach Anspruch 6, dadurch gekennzeichnet, daß wenigstens ein Teil (F) der Kommunikationsfilterungsmittel zwischen eines der Endgeräte (T21) und einen Durchschalter (C2), an den dieses Endgerät angeschlossen ist, eingefügt ist.

8. Lokales Netz nach Anspruch 6, dadurch gekennzeichnet, daß, wenn k größer als 1 ist, wenigstens ein Teil (F1-F4) der Kommunikationsfilterungsmittel in die Hauptstation (P') eingefügt ist.
